# EUROPEAN PATENT SPECIFICATION

(11) **EP 2 078 941 B1**
(45) Date of publication and mention of the grant of the patent: **19.10.2011**
(21) Application number: 09425001.6
(22) Date of filing: 05.01.2009
(51) Int. Cl.: G01M 3/32, B65D 88/02, B65D 90/50

(54) **Improved reservoir for liquids, particularly oil, gasoline and other hydrocarbons**
Verbesserter Behälter für Flüssigkeiten, insbesondere Öl, Benzin und andere Kohlenwasserstoffe
Réservoir amélioré pour des fluides, en particulier huile, essence et autres hydrocarbons

(30) Priority: 09.01.2008 IT RM20080015
(43) Date of publication of application: 15.07.2009
(73) Proprietor: Manzi Aurelio s.r.l., 01027 Montefiascone (VT) (IT)
(72) Inventor: Manzi, Rodolfo, 01027 Montefiascone (VT) (IT); Manzi, David, 01027 Montefiascone (VT) (IT)
(74) Representative: Iannone, Carlo Luigi

(56) References cited:
- WO-A-86/07574
- US-A- 5 816 426

## Description

The present invention relates to an improved reservoir for containing liquids, particularly oil, gasoline and other hydrocarbons.

More specifically, the invention concerns a reservoir for containing oil, studied and realized to permit an optimum preservation of hydrocarbons contained within the same, and a higher mechanical strength, but with a much reduced thickness of the walls.

In the fuel delivery field, choice of reservoirs for their containment has today an always more important role, particularly for preserving environment, to prevent noxious dispersion of hydrocarbons so as to require expensive land reclamation operations, problem that is under strict examination of the international rules.

During last years, methods and technologies for containing fuel are always substantially the same, and strictly connected to the use of steel, which is an always more inadequate material due to corrosion processes limiting its duration (maximum 8-10 years).

Thus, it is often necessary carrying out cumbersome operations for restoring reservoirs, that, as already said, are expensive and dangerous.

As already said, at present fuel reservoirs are typically comprised of single-wall steel (first generation of reservoirs), sometimes coated outside with a resin or polyethylene layer in order to prevent corrosion caused by galvanic current.

Afterwards, due to recent legislative modifications (particularly in Italy after Ministerial Decree of November 29, 2002 - "Technical requisites for realization, installation and operation of buried reservoirs destined to storage of liquid fuel for traction with delivery stations"), part of existing reservoirs has been updated by different technical solutions. A first mode to comply with the above rules was inner glassification in order to permit monitoring possible losses and its temperature.

Other reservoirs have been replaced by reservoir having a double wall (second generation) and a continuous monitoring system for gap. Material mainly employed for said second generation reservoirs are steel or steel - resin or steel - polyethylene.

Another kind of technology used in reservoirs put on the market in order to comply with the rules provides steel or plastic single - wall reservoirs, placed within a water proof concrete or reinforced concrete parallelepiped containment container; said solution is very expensive. The patent application WO 8607574 A1 describes a reservoir for liquids, particularly oil, according to the preamble of claim 1. A further example of reservoir is even known from patent application US 5816426 A. Another document disclosing a reservoir is EP-A-0520 978, upon which the preamble of claim 1 is based. As far as reservoir losses control systems are concerned, they usually comprise a panel control for detection of depression within air gap or for detection of liquid level within the reservoir, with a hydraulic communication with said gap. A technical problem of reservoirs according to the known technique is that of having design constraints due to proportions between containment volume and wall and gap thickness. Ideally, it would be suitable increasing reservoir volume, maintaining the same wall thickness. Nowadays, in order to reach this result it is necessary realizing the wall, or at least part of the wall, in case two walls are provided, by steel, as already said in the above. However, as it is well known, a limit to duration and safety of known steel reservoirs is that of being subjected to corrosion due to galvanic current or parasite current. Moreover, this is often exasperated by presence of a conductive layer or land. A further limit of the known reservoirs is that of not providing a solution for containment of accidental losses, or for protection from layer water infiltration in order to prevent pollution of land with oil and contamination of reservoir by water infiltration.

Sealing is a critical aspect for hydrocarbons under a commercial point of view. In fact, it must be taken into consideration that manager have noted that costs caused by premature failure of a reservoir are higher than costs due to replacement of the whole reservoir. A further technical problem of known steel reservoirs is that, in case of uses outdoor, they must be protected from sun rays in order to prevent excessive overheating of fuel contained therein. Furthermore, problems have been encountered when manufacturing double wall reservoirs due to the hollow space. In view of the above, it is object of the present invention that of suggesting a reservoir for containing hydrocarbons, such as oil, gasoline and like, with a high mechanical resistance, permitting realization of large reservoirs, always having a reduced wall thickness, and at the same time a high resistance against chemical agents and against corrosion.

Another object of the invention is that suggested reservoir can be manufactured with a higher flexibility and lower costs.

It is further object of the present invention that of suggesting suitable arrangements to prevent hydrocarbons spreading during reservoir filling and emptying operations.

It is therefore specific object of the invention an improved reservoir, particularly for containment of liquids, comprising a first inner wall, comprised of fiberglass, defining the containment volume for said liquids; a second outer wall, comprised of fiberglass, faced toward said first inner wall so as to realize a gap; means for monitoring losses, suitable to detect a variation of the inner pressure within said gap in case said first and/or second walls are damaged, with possible outflow of liquids from said containment volume; characterized in that it further comprises an alveolar material layer within said gap, coupled with, and integral with, said first and second walls so as to increase mechanical resistance of the assembly, realizing a structure having an alveolar gap suitable to permit detection of pressure variation inside said gap by said means for monitoring losses, said alveolar material layer being a fabric comprised of glass mixed with resin and two juxtaposed sheets, connected each other by a plurality of filaments that, following polymerization of said resin, cure creating said indeformable alveolar structure.

Always according to the invention, said first and second walls could be comprised of F.G.P.R. (polyether resin reinforced with fiber glass).

Still according to the invention, said first wall could comprise the following layers, from inside to outside of said reservoir: a C glass layer; a first mat layer; a first net layer; a second mat layer.

Further according to the invention, said first mat layer could comprise two mat layers.

Always according to the invention, said first wall could comprise the following further layers, from inside to outside of said reservoir: a second net layer; a third mat layer.

Still according to the invention, all resins employed in said layers are of the isophtalic type.

Further according to the invention, said second wall could comprise the following layers, from inside to outside of said reservoir: a first mat layer; a first net layer; a second mat layer.

Always according to the invention, said first mat layer could comprise two mat layers.

Still according to the invention, said second wall could comprise the following further layers from inside to outside of said reservoir: a second net layer; a third mat layer; a third net layer; a fourth net layer.

Further according to the invention, resins employed in said first mat layer could be of the isophtalic type, while resins employed in the other layers can be of the orthophthalic type.

Always according to the invention, it could comprise a flange coupled by coupling means, from which fitting of said reservoir exits; and a sump, provided in correspondence of said flange, suitable to contain possible pouring of said liquid during loading and unloading operations into/from said reservoir, and to prevent possible infiltrations of outer liquids.

Still according to the invention, said second wall could be protected outside by a liner comprised of resin (flexycoat) resisting to ultraviolet rays, in case of installation of said reservoir outdoor, and self-extinguishing.

Further according to the invention, said means for monitoring losses within said gap could be of the air type and include a container comprised of self-extinguishing technopolymer, a negative pressure pump connected with said gap and said container by pneumatic fitting, a manometer, connected to said gap (5), and electronic control card, operative connected with said negative pressure pump and said manometer.

Always according to the invention, said means for monitoring within gap could be of the water type and comprises an apparatus for galvanic separation, an antistatic plastic reservoir and a plurality of level probes galvanic separation, an antistatic plastic reservoir and a plurality of level probes.

The present invention will be now described, for illustrative but not limitative purposes, according to its preferred embodiments, with particular reference to the figures of the enclosed drawings, wherein:
figure 1 shows a cut-away perspective view of the improved reservoir for containing hydrocarbons according to the present invention;
figure 2 shows a perspective view of a section of reservoir according to figure 1;
figure 3 shows a plan view of reservoir according to figure 1;
figure 4 shows a longitudinal view of reservoir according to figure 1;
figure 5 shows a transversal view of reservoir according to figure 1;
figure 6 shows a particular of reservoir according to figure 1;
figure 7 shows a section of walls and gap of reservoir according to the present invention; and
figures 8 and 9 show load - defaillance deformation diagrams for two different test cycles.

In the different figures, similar parts will be indicated by the same numeric references.

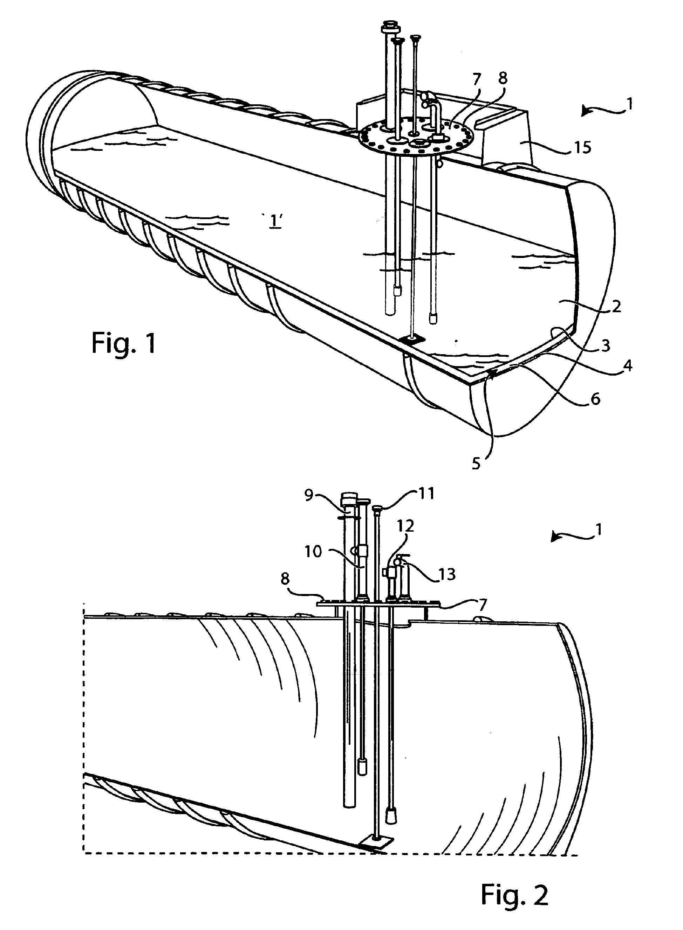

Making reference to figures 1 - 5, it is possible observing a reservoir 1 for containing liquids 2, particularly hydrocarbons, according to the invention.

Reservoir 1 comprises a first inner wall 3, defining containment volume 1', and a second outer wall 4, faced towards said first wall 3. A gap 5 is created between said first and second walls 3, 4, filled in with one layer 6 comprised of alveolar material, i.e. having more or less regular inner cavities containing air or liquid.

Said alveolar material layer 6 has, in its preferred embodiment, a uniform thickness of 3 mm, and can both stiffen reservoir 1 and, at the same time, permitting constant control of seal by traditional monitoring means as described in the following.

Said alveolar material 6 is a glass fabric comprised of two juxtaposed sheets, connected by a plurality of filaments, such as thin columns, spacing sheets of a distance of some millimetres. The whole is realised using a peculiar loom. After impregnation, vertical filaments place orthogonally with respect to plane of two sheets, and when resin contained in said material polymerizes, they stiffen, creating a not-deformable alveolar structure, similar to a honeycomb structure.

In fact, said alveolar material 6 is applied on two faced surfaces of said walls 3, 4, connecting them by said plurality of filaments. After laying and stiffening said filaments, not-deformable alveolar structure thus obtained remains structurally integral with the above first and second wall 3,4.

A flange 7 is fixed above said reservoir 1 by bolts 8. Said flange 7 is provided with a suitable sealing gasket, not shown in the figures. Moreover, the following elements projects from said flange 7:
- a fuel loading tube 9;
- a centralized fuel loading tube 10;
- a tube 11 for insertion of dip stick;
- a vapour vent tube 12;
- a discharge tube 13;
- a hole for providing a probe.

Said reservoir further includes a sump 15, preferably having a square shape, within which flange 7 is provided. Said sump aims preserving passage for inspection from every outer agent, containing every phenomenon of liquid pouring when loading and unloading the same, preventing possible liquid infiltrations from outside the same sump 15, and realising a resting base for reinforced concrete elevations (CLS or CAV).

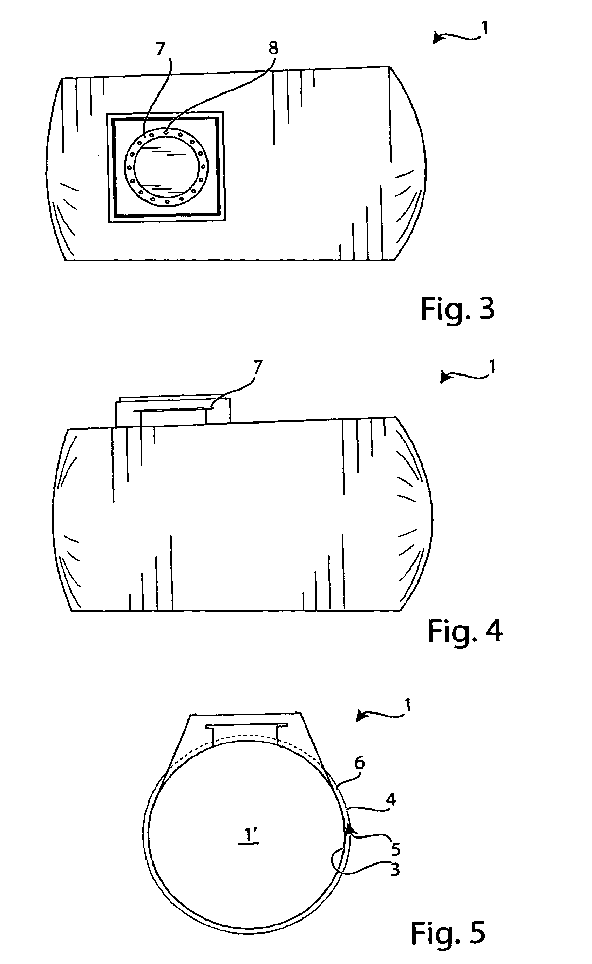

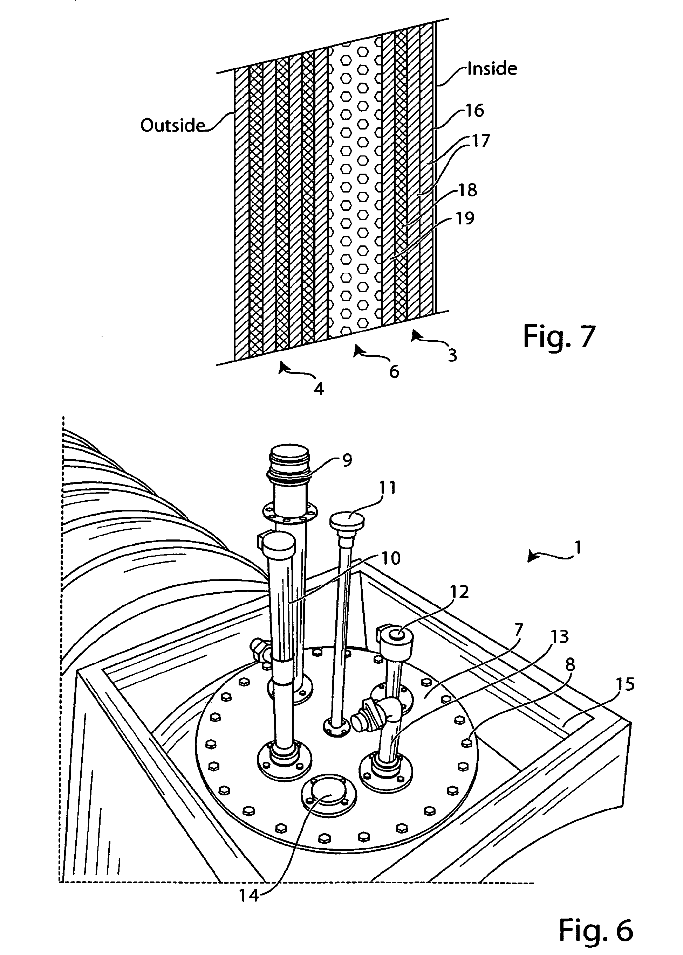

Said first and second walls 3 and 4 are both comprised of fiberglass, and particularly of polyether resin reinforced with fiber glass (F.G.R.P.), and preferably have a thickness of 3 mm. Material of figures 3 and 4 can be better analysed making reference to figure 7, wherein composition of layers of said walls 3 and 4 can be observed, said composition comprising the following basic materials:
- glass c: it is a particular fiber glass realised by chopped stands, cut with set lengths of 3 - 4 - 6 - 12 and 25 mm, realising a sheet. Each fiber is comprised of many primary sized filaments (about 500);
- mat: comprised of roving strands with a length of 5 cm, evenly coarsely distributed along a plane without preferential orientation, similar to felt. It is usually employed as reinforcement and it is mainly employed in nautical sector and more generally in fiberglass items;

- net: it is a product obtained by tessitura of rovings, usually employing a "balance frame structure" (armatura a tela bilancia). Nets are usually employed in combination with said mats. They have a lower deformability, but remarkably increase resistance of laminate according to fiber orientation axis;
- orthophthalic resin: it is a commonly used resin, suitable for stratifying with fibreglass mat and nets, for realisation of fiberglass. It has good mechanical features and high wetting rate with respect to fiber. Tixotropic property reduce at the minimum level tendency to pouring when stratifying vertically.
- Isophtalic resin: it is a resin having a clear and uncoloured aspect, it does not yellows. It is suitable for impregnation of mats or glass fabrics when it is wished obtaining transparent stratified elements. With respect to orthophthalic resin, it has a higher resistance to chemical aggression.

In the present embodiment, wall 3 comprises the following layers:
- 1 layer of glass C 16;
- 2 layers of mat 17 of 450 g/m²;
- 1 layer of net 18 of 500 g/m²;
- 1 layer of mat 19 of 450 g/m²;
- 1 layer of net 20 of 500 g/m²;
- 1 layer of mat 21 of 450 g/m²;

Wherein all resins are of the isophtalic type. Instead, wall 4 comprises the following layers:
- 2 layer of mat 21 of 450 g/m²;
- 1 layer of net 22 of 500 g/m²;
- 1 layer of mat 23 of 450 g/m²;
- 1 layer of net 24 of 500 g/m²;
- 1 layer of mat 25 of 450 g/m²;
- 1 layer of net 26 of 500 g/m²;
- 1 layer of mat 27 of 450 g/m²,
wherein resin of layer 22 of the isophtalic type, while resins employed for other layers 23 - 27 are of the orthophthalic type.

As already said, a layer of alveolar material 6 with a thickness of 3 mm is interposed between said first and second walls 3, 4.

It is to be noted that sump 15 is comprised of F.G.R.P..

As already said, reservoir 1 according to the invention is suitable to use also means for monitoring losses within gap 5, said means being of the air or water type.

Air monitoring means comprise a container made up of self-extinguishing technopolymer, a negative pressure pump, connected with said gap, and with said container, by pneumatic fittings, and a control electronic card.

Instead, water monitoring means comprise a galvanic separation apparatus, a plastic reservoir and level probes.

In case of losses from reservoir 1, said monitoring means can detect variation of level within the gap 5, which obviously is a water-tight gap.

Reservoir 1 according to the invention can be manufactured in a very flexible way. In fact, once realised first wall 3, it is possible laying down layer of alveolar material 6 and then applying on the same the second wall 4, thus obtaining the above rigid structure, thus providing the first wall 3 - alveolar material layer 6 - second wall 4 assembly with a better mechanical resistance both of single-wall steel reservoirs and double wall reservoirs with steel layers. This permits obtaining larger reservoirs with the same thickness of walls.

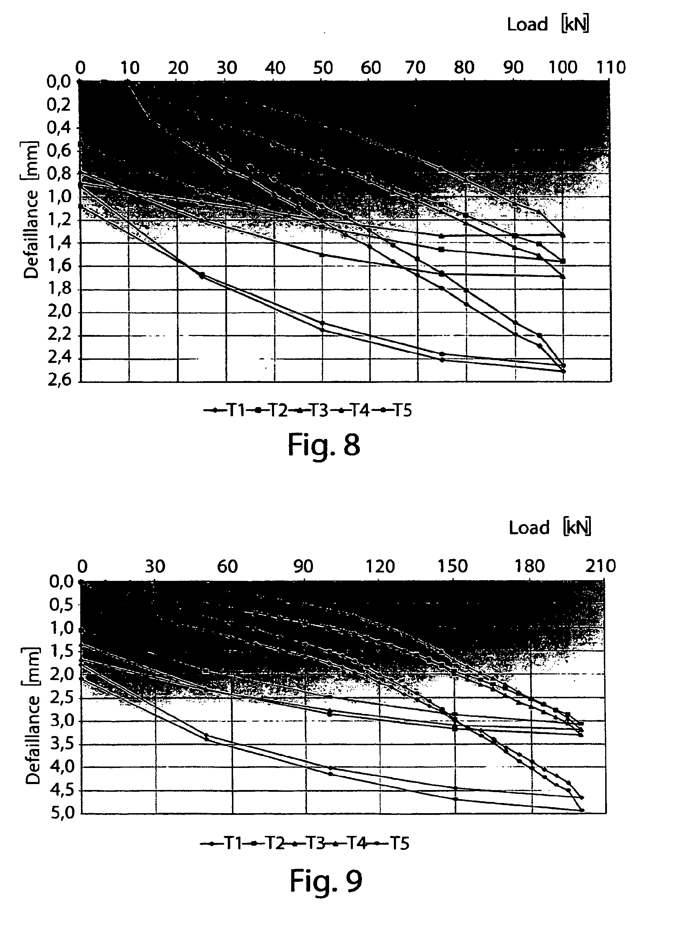

In order to demonstrate mechanical resistance of reservoir 1, it is possible observing figures 8 and 9, showing diagrams of load-defaillance deformations of the same in two different test cycles, wherein abscissa show load on reservoir and ordinate displacement at different points measured in millimetres. Mechanical behaviour is thus relevant to an alveolar wall that, as well known, takes very good mechanical features in resistance/weight ratio as it naturally occurs for bird skeletal apparatus.

Five curves represent detection of transducers which are provided, as already said, in different points of reservoir, showing that the same have high performances.

Finally, it must be considered that, in case said reservoir 1 must not be buried, but it will be used outside, it outer surface is covered by a liner comprised of self-extinguishing flexycoat suitable to resist to ultraviolet rays.

An advantage of reservoir according to the present invention is that, thanks to properties of materials employed, it has high resistance against chemical agents typical of oil products.

A further advantage of the present invention is that reservoir, due to intrinsic features of the resin, is characterised by lack of electrical conductivity, thus completely lacking galvanic currents typical in metallic reservoirs, and having a high thermal insulation, ensuring inalterability of product.

It is still an advantage of the present invention that of lasting even 30 years and that it is not necessary making vacuum within gap to manufacture the same reservoir.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Improved reservoir (1), particularly for containment of liquids (2), comprising
a first inner wall (3), comprised of fiberglass, defining the containment volume (1) for said liquids (2);
a second outer wall (4), comprised of fiberglass, faced toward said first inner wall (3) so as to realize a gap (5);
means for monitoring losses, suitable to detect a variation of the inner pressure within said gap (5) in case said first and/or second walls (3, 4) are damaged, with possible outflow of liquids (2) from said containment volume (1');
**characterized**
**in that** it further comprises an alveolar material layer (6) within said gap (5), coupled with, and integral with, said first and second walls (3, 4) so as to increase mechanical resistance of the assembly, realizing a structure having an alveolar gap suitable to permit detection of pressure variation inside said gap (5) by said means for monitoring losses, said alveolar material layer (6) being a fabric comprised of glass mixed with resin and two juxtaposed sheets, connected each other by a plurality of filaments that, following polymerization of said resin, cure creating said indeformable alveolar structure;
and **in that** said first and second walls (3, 4) are comprised of F.G.P.R. (polyether resin reinforced with fiber glass).

2. Reservoir (1) according to claim 1, **characterized in that** said first wall (3) comprises the following layers, from inside to outside of said reservoir (1):
- a C glass layer (16);
- a first mat layer (17);
- a first net layer (18);
- a second mat layer (19).

3. Reservoir (1) according to claim 2, **characterized in that** said first mat layer (17) comprises two mat layers.

4. Reservoir (1) according to anyone of the preceding claims 2 or 3, **characterized in that** said first wall (3) comprises the following further layers, from inside to outside of said reservoir (1):
- a second net layer;
- a third mat layer.

5. Reservoir (1) according to anyone of the preceding claims, **characterized in that** all resins employed in said layers are of the isophtalic type.

6. Reservoir (1) according to anyone of the preceding claims, **characterized in that** said second wall (4) comprises the following layers, from inside to outside of said reservoir (1):
- a first mat layer (21);
- a first net layer (22);
- a second mat layer (23).

7. Reservoir (1) according to claim 6, **characterized in that** said first mat layer (21) comprises two mat layers.

8. Reservoir (1) according to anyone of the preceding claims 6 or 7, **characterized in that** said second wall (4) further comprises the following further layers from inside to outside of said reservoir (1):
- a second net layer (24);
- a third mat layer (25);
- a third net layer (26);
- a fourth net layer (27).

9. Reservoir (1) according to anyone of the preceding claims 6 - 8, **characterized in that** resins employed in said first mat layer are of the isophtalic type, while resins employed in the other layers can be of the orthophthalic type.

10. Reservoir (1) according to anyone of the preceding claims, **characterized in that** it comprises
a flange (7) coupled by coupling means (8), from which fitting (9, 10, 11, 12, 13, 14) of said reservoir exits; and
a sump (15), provided in correspondence of said flange (7), suitable to contain possible pouring of said liquid during loading and unloading operations into/from said reservoir (1), and to prevent possible infiltrations of outer liquids.

11. Reservoir (1) according to anyone of the preceding claims, **characterized in that** said second wall (4) is protected outside by a liner comprised of resin (flexycoat) resisting to ultraviolet rays, in case of installation of said reservoir (1) outdoor, and self-extinguishing.

12. Reservoir (1) according to anyone of the preceding claims, **characterized in that** said means for monitoring losses within said gap (5) are of the air type and include a container comprised of self-extinguishing technopolymer, a negative pressure pump connected with said gap (5) and said container by pneumatic fitting, a manometer, connected to said gap (5), and electronic control card, operative connected with said negative pressure pump and said manometer.

13. Reservoir (1) according to anyone of the preceding claims 1 - 11, **characterized in that** said means for monitoring within gap (5) are of the water type and comprises an apparatus for galvanic separation, an antistatic plastic reservoir and a plurality of level probes.

## Patentansprüche

1. Verbesserter Behälter (1), insbesondere für die Aufnahme von Flüssigkeiten (2), umfassend
eine erste innere Wand (3), die Fiberglas umfasst, welche das Aufnahmevolumen (1') für die Flüssigkeiten (2) definiert;
eine zweite äußere Wand (4), die Fiberglas umfasst, welche der ersten inneren Wand (3) so zugewandt ist, dass ein Zwischenraum (5) gebildet wird;
Mittel zur Überwachung von Verlusten, welche(s) geeignet sind/ist, um eine Veränderung des Innendrucks innerhalb des Zwischenraums (5) nachzuweisen, falls die erste und/oder die zweite Wand (3, 4) beschädigt sind, mit einem möglichen Ausstrom von Flüssigkeiten (2) aus dem Aufnahmevolumen (1');
**dadurch gekennzeichnet,**
**dass** er ferner eine alveolare Materialschicht (6) innerhalb des Zwischenraums (5) umfasst, die mit den ersten und zweiten Wänden (3, 4) verbunden und damit integriert ist, um so die mechanische Beständigkeit der Anordnung zu erhöhen, unter Bildung einer Struktur mit einem alveolaren Zwischenraum, welche geeignet ist, den Nachweis einer Druckveränderung innerhalb des Zwischenraums (5) durch das/die Mittel zur Überwachung von Verlusten zu erlauben, wobei die alveolare Materialschicht (6) ein Gewebe darstellt, das Glas in Mischung mit Harz und zwei nebeneinander angeordnete Lagen umfasst, die miteinander über eine Vielzahl von Filamenten verbunden sind, so dass nach der Polymerisation des Harzes und Aushärtung die nicht deformierbare alveolare Struktur gebildet wird;
und **dadurch**, dass die genannten ersten und zweiten Wände (3, 4) Polyetherharz, das mit Fiberglas verstärkt ist, (F.G.P.R.) umfassen.

2. Behälter (1) nach Anspruch 1, **dadurch gekennzeichnet, dass** die erste Wand (3) die folgenden Schichten, vom Inneren zum Äußeren des Behälters (1), umfasst:
- eine C-Glas-Schicht (16);
- eine erste Mattenschicht (17);
- eine erste Netzschicht (18);
- eine zweite Mattenschicht (19).

3. Behälter (1) nach Anspruch 2, **dadurch gekennzeichnet, dass** die erste Mattenschicht (17) zwei Mattenschichten umfasst.

4. Behälter (1) nach irgendeinem der vorhergehenden Ansprüche 2 oder 3, **dadurch gekennzeichnet, dass** die erste Wand (3) die folgenden weiteren Schichten, vom Inneren zum Äußeren des Behälters (1), umfasst:
- eine zweite Netzschicht;
- eine dritte Mattenschicht.

5. Behälter (1) nach irgendeinem der vorhergehenden Ansprüche, **dadurch gekennzeichnet, dass** alle Harze, die in den Schichten eingesetzt werden, vom Isophthal-Typ sind.

6. Behälter (1) nach irgendeinem der vorhergehenden Ansprüche, **dadurch gekennzeichnet, dass** die zweite Wand (4) die folgenden Schichten, vom Inneren zum Äußeren des Behälters (1), umfasst:
- eine erste Mattenschicht (21);
- eine erste Netzschicht (22);
- eine zweite Mattenschicht (23).

7. Behälter (1) nach Anspruch 6, **dadurch gekennzeichnet, dass** die erste Mattenschicht (21) zwei Mattenschichten umfasst.

8. Behälter (1) nach irgendeinem der vorhergehenden Ansprüche 6 oder 7, **dadurch gekennzeichnet, dass** die zweite Wand (4) ferner die folgenden weiteren Schichten, vom Inneren zum Äußeren des Behälters (1), umfasst:
- eine zweite Netzschicht (24);
- eine dritte Mattenschicht (25);
- eine dritte Netzschicht (26);
- eine vierte Netzschicht (27).

9. Behälter (1) nach irgendeinem der vorhergehenden Ansprüche 6 - 8, **dadurch gekennzeichnet, dass** die in der ersten Mattenschicht eingesetzten Harze vom Isophthal-Typ sind, während die in den anderen Schichten eingesetzten Harze vom Orthophthal-Typ sein können.

10. Behälter (1) nach irgendeinem der vorhergehenden Ansprüche, **dadurch gekennzeichnet, dass** er umfasst
einen über Verbindungsmittel (8) verbundenen Flansch (7), von dem Anschlüsse (9, 10, 11, 12, 13, 14) des Behälters ausgehen, und
einen Auffangbehälter (15), der korrespondierend zu dem Flansch (7) angeordnet ist, geeignet, um ein mögliches Vergießen der Flüssigkeit während Beladungs- und Entladungsvorgängen in/aus den/m Behälter (1) aufzufangen, und um ein mögliches Eindringen von externen Flüssigkeiten zu verhindern.

11. Behälter (1) nach irgendeinem der vorhergehenden Ansprüche, **dadurch gekennzeichnet, dass** die zweite Wand (4) außen durch eine Umhüllung geschützt wird, welche ein Harz (Flexycoat) umfasst, das gegen UV-Strahlen beständig ist, im Falle der Installation des Behälters (1) im Freien, und selbstlöschend ist.

12. Behälter (1) nach irgendeinem der vorhergehenden Ansprüche, **dadurch gekennzeichnet, dass** das/die Mittel zur Überwachung von Verlusten innerhalb des Zwischenraums (5) vom Luft-Typ ist/sind und einen Behälter, der ein selbstlöschendes Technopolymer umfasst, eine Negativdruckpumpe, die mit dem Zwischenraum (5) und diesem Behälter über einen pneumatischen Anschluss verbunden ist, ein mit dem Zwischenraum (5) verbundenes Manometer und eine elektronische Steuerungskarte, die funktionsfähig mit der Negativdruckpumpe und dem Manometer verbunden ist, einschließt (en).

13. Behälter (1) nach irgendeinem der vorhergehenden Ansprüche 1 - 11, **dadurch gekennzeichnet, dass** das/die Mittel zur Überwachung innerhalb des Zwischenraums (5) vom Wasser-Typ ist/sind und eine Vorrichtung zur galvanischen Trennung, einen antistatischen Kunststoffbehälter und eine Vielzahl von Niveausonden umfasst (en).

## Revendications

1. Réservoir amélioré (1), en particulier pour contenir des liquides (2), comprenant
- une première paroi intérieure (3) en fibre de verre, définissant le volume de confinement (1) desdits liquides (2);
- une seconde paroi extérieure (4) en fibre de verre, tournée vers ladite première paroi intérieure (3) afin de réaliser un interstice (5);
- des moyens de contrôle de pertes, aptes à détecter une variation de la pression interne à l'intérieur dudit interstice (5) dans le cas où lesdites première et/ou seconde parois (3, 4) sont endommagées, avec un éventuel écoulement de liquides (2) hors dudit volume de confinement (1');
**caractérisé**
**en ce qu'**il comprend, en outre, une couche de matériau alvéolaire (6) à l'intérieur dudit interstice (5), couplée aux, et solidaire desdites première et seconde parois (3, 4) afin d'augmenter la résistance mécanique de l'ensemble, réalisant ainsi une structure dotée d'un interstice alvéolaire apte à permettre la détection d'une variation de pression à l'intérieur dudit interstice (5) par lesdits moyens de contrôle de pertes, ladite couche de matériau alvéolaire (6) étant un tissu constitué de verre mélangé à de la résine et de deux feuilles juxtaposées, reliées entre elles par une pluralité de filaments qui, après polymérisation de ladite résine, durcissent et créent ladite structure alvéolaire indéformable;
et ce que lesdites première et seconde parois (3, 4) sont constituées de F.G.P.R. (résine de polyéther renforcée de fibre de verre).

2. Réservoir (1) selon la revendication 1, **caractérisé en ce que** ladite première paroi (3) comprend les couches suivantes, en partant de l'intérieur vers l'extérieur dudit réservoir (1) :
- une couche de verre C (16);
- une première couche de natte (17);
- une première couche de filet (18);
- une seconde couche de natte (19).

3. Réservoir (1) selon la revendication 2, **caractérisé en ce que** ladite première couche de natte (17) comprend deux couches de natte.

4. Réservoir (1) selon l'une quelconque des revendications précédentes 2 ou 3, **caractérisé en ce que** ladite première paroi (3) comprend les couches supplémentaires suivantes, de l'intérieur vers l'extérieur dudit réservoir (1) :
- une seconde couche de filet;
- une troisième couche de natte.

5. Réservoir (1) selon l'une quelconque des revendications précédentes, **caractérisé en ce que** toutes les résines utilisées dans lesdites couches sont du type isophtalique.

6. Réservoir (1) selon l'une quelconque des revendications précédentes, **caractérisé en ce que** ladite seconde paroi (4) comprend les couches suivantes, de l'intérieur vers l'extérieur dudit réservoir (1) :
- une première couche de natte (21);
- une première couche de filet (22);
- une seconde couche de natte (23).

7. Réservoir (1) selon la revendication 6, **caractérisé en ce que** ladite première couche de natte (21) comprend deux couches de natte.

8. Réservoir (1) selon l'une quelconque des revendications précédentes 6 ou 7, **caractérisé en ce que** ladite seconde paroi (4) comprend, en outre, les couches supplémentaires suivantes de l'intérieur vers l'extérieur dudit réservoir (1) :
- une seconde couche de filet (24);
- une troisième couche de natte (25);
- une troisième couche de filet (26);
- une quatrième couche de filet (27).

9. Réservoir (1) selon l'une quelconque des revendications précédentes 6 à 8, **caractérisé en ce que** les résines utilisées dans ladite première couche de natte sont du type isophtalique, tandis que les résines utilisées dans les autres couches peuvent être du type orthophtalique.

10. Réservoir (1) selon l'une quelconque des revendications précédentes, **caractérisé en ce qu'**il comprend :
une bride (7) accouplée par des moyens d'accouplement (8), de laquelle sort un raccord (9, 10, 11, 12, 13, 14) dudit réservoir; et
un puisard (15), prévu en correspondance avec ladite bride (7), apte à contenir le déversement éventuel dudit liquide pendant les opérations de chargement et de déchargement dans le/à partir dudit réservoir (1), et à empêcher d'éventuelles infiltrations de liquides extérieurs.

11. Réservoir (1) selon l'une quelconque des revendications précédentes, **caractérisé en ce que** ladite seconde paroi (4) est protégée à l'extérieur par une garniture constituée de résine (flexycoat) résistant aux rayons ultraviolets, en cas d'installation dudit réservoir (1) en plein air, et ignifuge.

12. Réservoir (1) selon l'une quelconque des revendications précédentes, **caractérisé en ce que** lesdits moyens pour contrôler les pertes à l'intérieur dudit interstice (5) sont du type pneumatique et comprennent un conteneur en technopolymère ignifuge, une pompe à pression négative raccordée audit interstice (5) et audit conteneur par un raccord pneumatique, un manomètre, relié audit interstice (5), et une carte électronique de commande, reliée de manière fonctionnelle à ladite pompe à pression négative et audit manomètre.

13. Réservoir (1) selon l'une quelconque des revendications 1 à 11, **caractérisé en ce que** lesdits moyens de contrôle à l'intérieur de l'interstice (5) sont du type hydraulique et comprennent un dispositif de séparation galvanique, un réservoir en plastique antistatique et une pluralité de sondes de niveau.
